# EUROPÄISCHE PATENTSCHRIFT

(11) **EP 1 992 057 B1**
(45) Veröffentlichungstag und Bekanntmachung des Hinweises auf die Patenterteilung: **30.04.2014**
(21) Anmeldenummer: 07703976.6
(22) Anmeldetag: 18.01.2007
(51) Int. Cl.: H02K 33/10, H02K 41/03, H02K 1/14

(54) **LINEARANTRIEB MIT REDUZIERTER AXIALER KRAFTKOMPONENTE SOWIE LINEARVERDICHTER UND KÄLTEGERÄT**
LINEAR DRIVE WITH A REDUCED AXIAL FORCE COMPONENT, AS WELL AS A LINEAR COMPRESSOR AND REFRIGERATOR
ENTRAINEMENT LINEAIRE AVEC COMPOSANTE DE FORCE AXIALE REDUITE AINSI QUE COMPRESSEUR LINEAIRE ET GROUPE FRIGORIFIQUE

(30) Priorität: 28.02.2006 DE 102006009271
(43) Veröffentlichungstag der Anmeldung: 19.11.2008
(73) Patentinhaber: BSH Bosch und Siemens Hausgeräte GmbH, 81739 München (DE)
(72) Erfinder: RÖCKELEIN, Rudolf, 91052 Erlangen (DE); WEINERT, Ulrich, 91074 Herzogenaurach (DE)
(86) Internationale Anmeldenummer: PCT/EP2007/050480
(87) Internationale Veröffentlichungsnummer: WO 2007/098990

(56) Entgegenhaltungen:
- WO-A-96/12336
- WO-A-99/40673
- US-A- 5 175 457

## Beschreibung

Die Erfindung betrifft einen Linearantrieb mit einem Stator und einen darin entlang einer Achse hin und her beweglichen Läufer, wobei der Stator einen magnetisierbaren Magnetfeldführungskern mit Beinen aufweist, wobei sich die Beine jeweils mit einem Fuß im Wesentlichen zum Läufer hin erstrecken; einen Linearverdichter, ein Kältegerät, insbesondere ein Kühl- und/oder Gefriergerät oder eine Klimaanlage, sowie ein Verfahren zum Kühlen einer Ware und/oder zum Verdichten eines Fluids.

Linearantriebe mit permanent erregten Läufern werden durch eine entsprechende Ansteuerung der Antriebsspulen am Stator gezielt bewegt, indem ein entsprechender Strom durch die Antriebsspulen geschickt wird Die Spulenfelder werden durch einen magnetisierbaren Magnetfeldführungskern mit Polen geführt und auf einen Bereich um den Läufer fokussiert.

DE 699 015 86 T2 offenbart einen elektromagnetischen linearen Schalter umfassend eine Stator-Konstruktion mit zwei Polen, die durch mindestens eine elektrische Wicklung erregt sind. Ein bewegliches Bauteil weist ein Magnetjoch und ein magnetisierbaren Teil auf, wobei das bewegliche Bauteil einen oder zwei Magnete aufweist, die permanent in einer Richtung senkrecht zur Ebene des Spaltes magnetisiert und in eine Vertiefung des beweglichen Magnetjochs eingelassen sind. Hierbei ist ein Statorteil aus einem Stück ferromagnetischen Materials gebildet, welches Beine mit Füßen aufweist, die als polare Ausbauchungen ausgebildet sind.

Bei den bekannten Lösungen stellt sich das Problem, dass eine genaue Ansteuerung des Läufers schwierig ist und insbesondere die Hin- und Herbewegung des Läufers nicht immer mit der erwünschten Genauigkeit kontrolliert werden kann. Die Ungenauigkeit der Hin- und Herbewegung ist insbesondere in Verbindung mit Linearverdichtern nachteilig, da hier eine möglichst hohe Positionierungsgenauigkeit des Verdichterkolbens erforderlich ist, um ein Totvolumen im Verdichterkolbengehäuse möglichst gering zu halten: Bei einer unkontrollierten Bewegung des Verdichterkolbens stößt der Verdichterkolben bei einem zu gering bemessenen Sicherheitsabstand zwischen Kolbengehäuse und Verdichterkolben gegen das Kolbengehäuse bzw. gegen eine Ventilplatte, wodurch die Ventilplatte, der Verdichterkolben und die Kolbenstange zwischen Läufer und Verdichterkolben beschädigt werden können. Zwar könnte man dieses Problem vermeiden, indem der Sicherheitsabstand zwischen Kolbengehäuse und Verdichterkolben hinreichend vergrößert wird, doch sollte das Totvolumen im Kolbengehäuse möglichst klein sein, um den Wirkungsgrad des Linearverdichters nicht zu stark zu beeinträchtigen.

Es ist bekannt, die Ungenauigkeiten bei der Hin- und Herbewegung mittels einer Regelung auszuregeln, indem Positionssensoren am Läufer platziert werden und der Läufer mit Hilfe einer entsprechenden Ansteuerung der Antriebsspulen rechtzeitig abgebremst wird. Derartige Abbremsvorgänge können zwar ein Anschlagen des Verdichterkolbens wirksam verhindern, jedoch sind sie vor dem Hintergrund eines möglichst hohen Wirkungsgrads nachteilig, da die Bremsenergie dem System verloren geht.

Es ist daher Aufgabe der vorliegenden Erfindung, einen Linearantrieb, einen Linearverdichter sowie ein Kältegerät anzugeben, bei denen eine Hin- und Herbewegung der beweglichen Teile möglichst präzise kontrolliert werden kann, sowie ein Verfahren bereitzustellen, mit dem besonders effizient, energiesparsam und zuverlässig Waren gekühlt bzw. ein Fluid verdichtet werden kann.

Dieser Aufgabe wird erfindungsgemäß gelöst durch den Linearantrieb, durch den Lihearverdichter, durch das Kältegerät sowie durch das Verfahren zum Kühlen einer Ware und/oder zum Verdichten eines Fluids wie in den unabhängigen Ansprüchen angegeben. Weitere vorteilhafte Ausgestaltungen und Weiterbildungen, die jeweils einzeln angewandt oder beliebig miteinander kombiniert werden können, sind Gegenstand der jeweilig abhängigen Ansprüche.

Wie sich gezeigt hat, resultiert ein erheblicher Anteil der Positionierungsungenauigkeiten des Läufers aus der Wechselwirkung des Läufers mit dem Stator, ohne dass ein Strom durch die Antriebsspulen fließt. Die Kräfte zwischen Läufer und Stator werden dadurch verursacht, dass Magnetränder bzw. Magnetisierungswechsel des Permanentmagneten am Läufer mit den Polecken an den Beinen des Magnetfeldführungskerns vom Stator wechselwirken. Bei bekannten Linearantrieben wird der Läufer je nach Auslenkung aus seiner Ruhelage entweder zur Ruhelage hin gezogen oder von dieser weg gedrückt, selbst wenn kein Strom durch die Antriebsspulen fließt. Bei einer symmetrischen Auslegung des Läufers bzw. des Stators ist die durch die Wechselwirkung vermittelte Kraftwirkung entlang der Längsachse in Bezug auf die Ruhelage punktsymmetrisch. Da die Kraftwirkung der stromdurchflossenen Antriebsspulen möglichst unabhängig von der Auslenkung des Läufers sein soll, führt diese Wechselwirkung zu unerwünschten Verzerrungen der Kraft-Weg Kennlinie, welches zu den beschriebenen steuerungstechnischen Problemen führt.

Der erfindungsgemäße Linearantrieb umfasst einen Stator und einen darin entlang einer Achse hin und her beweglichen Läufer, wobei der Stator einen magnetisierbaren Magnetfeldführungskern mit Beinen aufweist, wobei sich die Beine jeweils mit einem Fuß im Wesentlichen zum Läufer hin erstrecken, wobei der Läufer mehrere in der Richtung der Achse hintereinander angeordnete Magnete aufweist, und sieht vor, dass die jeweiligen Längen der Magnete entlang der Achse und/oder die jeweiligen Breiten der Beine entlang der Achse und/oder die jeweiligen Abstände der Beine entlang der Achse verschieden sind derart, dass sich die Kraftkomponenten der Magnete entlang der

Achse im stromlosen Zustand des Linearantriebs im wesentlichen gegenseitig kompensieren.

Hierdurch kann der Anteil der Kraft, der bereits ohne Stromeinwirkung besteht, auf weniger als 30 %, insbesondere auf weniger als 20%, vorzugsweise auf weniger als 10%, der nominalen Kraft des Linearantriebs im Betrieb bei konstantem Strom begrenzt werden.

Durch eine geeignete Bemessung der Längen, Breiten und Abstände wird ein Kraftbeitrag, der durch Wechselwirkung eines ersten Fußes mit einer ersten Kante eines ersten Magneten erzeugt wird, durch eine Kraftkomponente eines zweiten Fußes mit einer zweiten Kante des ersten oder eines zweiten Magnetes zumindest teilweise kompensiert. Durch die Abstimmung der Längen der Magnete am Läufer auf die Breiten und Abstände der Beine entlang der Achse kann die entlang der Achse wirkende Kraftkomponente des Läufers im stromlosen Zustand des Linearantriebs angepasst werden, wobei insbesondere die durch die einzelnen Füße bzw. Enden der Magnete erzeugten Kraftbeiträge sich zumindest teilweise gegenseitig wegheben.

Vorteilhafterweise weist der Stator mindestens eine Antriebsspule auf, mit der ein Magnet-, feld erzeugt werden kann. Der Stator weist einen magnetisierbaren Magnetfeldführungskern auf, der insbesondere aus einer Vielzahl von lamellenartigen Blechen aus einem Weichmagnet besteht. Der Magnetfeldführungskern kann als Spulenkern ausgebildet sein, d.h. er ist von einer Spule mindestens teilweise umgeben, die unter Stromeinwirkung eine entsprechende Magnetisierung im Magnetfeldführungskern hervorruft und zu einer entsprechenden Konzentration des Magnetfelds im Bereich des Läufers führt. Der Magnetfeldführungskern führt das Magnetfeld zum Läufer hin und weist hierzu Beine auf, die sich zum Läufer hin erstrecken. Die Beine weisen an ihrem freien Ende, d. h. an dem zum Läufer hinweisenden Ende, jeweils einen Fuß auf. Ein Fuß kann eine entlang der Achse über das Bein hervorstehende Auswölbung bzw. einen Vorsprung aufweisen.

In einer alternativen Ausführungsform kann der Stator mit einem Permanentmagnet ausgestattet sein und keine Antriebsspule aufweisen; in diesem Fall ist die Antriebsspule am Läufer vorgesehen.

Es hat sich gezeigt, dass eine durch die Wechselwirkung zwischen dem Fuß und dem Läufer vermittelte unerwünschte axiale Kraftkomponente dadurch reduziert werden kann, dass mindestens ein Fuß eine abgeschrägte Fläche aufweist. Die abgeschrägte Fläche kann durch Abfasen gebildet werden. Die abgeschrägte Fläche kann eben wie auch gewölbt sein, wobei die Wölbung konvex oder konkav sein kann. Bevorzugt ist eine konvexe, d. h. nach außen gekrümmte Fläche.

Die drei Varianten können zusammen oder unabhängig voneinander zum Einsatz kommen. Besonders bevorzugt sind eine Kombination der ersten und der zweiten Variante sowie eine Kombination der ersten und der dritten Variante.

Durch die Erfindung wird der Nachteil der bekannten Lösungen überwunden, dass durch die Wechselwirkung der Pole bzw. Füße mit dem Läufer Kaftkomponenten entstehen, welche die eigentliche, durch den Spulenstrom erzeugte Kraft überlagern, und ein asymmetrisches Kraftwegprofil des Läufers hervorrufen. Eine Asymmetrie wird erheblich reduziert und die Steuerung des Läufers wird deutlich vereinfacht. In der Folge kann der Linearantrieb präzise und effizient, d.h. trotz hoher Positionierungsgenauigkeit mit nur wenigen oder ohne Bremsvorgängen, betrieben werden. Es wird ein hohes Maß an Zuverlässigkeit erreicht.

Es ist vorteilhaft, den Fuß mit einer Formgebung auszugestalten, welche die Wechselwirkung zwischen dem Fuß und dem Läufer auch im stromlosen Zustand der Antriebsspule berücksichtigt.

Unter ungraden Kraftkomponenten werden jene in Bezug auf einen Symmetriepunkt punktsymmetrische Kraftkomponenten verstanden, die mit Hilfe eines ungeraden Polynoms dargestellt werden können. Gerade Kraftkomponenten sind jene in Bezug auf einen Symmetriepunkt spiegelsymmetrische Kraftkomponenten, die mit einem Polynom mit ausschließlich geraden Exponenten dargestellt werden können. Durch die geeignete Wahl der Längen, Abstände und Breiten relativ zueinander kann der Anteil der ungeraden Kraftkomponenten entlang der Achse an der Gesamtkraft entlang der Achse bzw. der Anteil der bereits ohne Stromeinwirkung existierenden Kraftkomponenten entlang der Achse an der nominalen Gesamtkraft des Linearantriebs entlang der Achse unter Stromeinwirkung auf weniger als 30 %, insbesondere weniger als 20 %, vorzugsweise weniger als 10 %, gesenkt werden.

Die Gesamtkraft ist die maximale Kraft, die der Läufer erfährt, wenn der Linearantrieb mit dem ihm zugeordneten konstanten nominalen Betriebsstrom betrieben wird.

Durch die unterschiedlichen Längen, Breiten und Abstände wechselwirken die jeweiligen Magnete und Füße derart miteinander, dass eine Kraftwirkung in axialer Richtung im stromlosen Zustand verringert wird. Die Verringerung der Kraftkomponenten bezieht sich stets auf den Arbeitsbereich des Läufers, d.h. betrifft nur jene Kraftkomponenten, die innerhalb des Arbeitshubs des Läufers auftreten. Außerhalb des Arbeitsbereiches liegende Kraftkomponenten werden hierbei nicht berücksichtigt.

Bei den verschiedenen Varianten wird die Wechselwirkung des Läufers mit den Beinen des magnetisierbaren Magnetfeldführungskerns am Stator in der Weise beeinflusst, so dass unerwünschte, bereits im stromlosen Zustand des Linearantriebs existierende axiale Kraftkomponenten verringert werden.

In einer Ausgestaltung weist ein in Bezug auf die Richtung der Achse liegender Außenfuß eine abgeschrägte Fläche auf. Insbesondere weisen beide Außenfüße eine abgeschrägte Fläche auf. Mit Hilfe der abgeschrägten Fläche wird eine lokale Verzerrung des Magnetfelds am Außenfuß verringert, wodurch in Längsrichtung wirkende Kraftkomponenten reduziert werden.

In einer weiteren Ausgestaltung weist ein Fuß einen Vorsprung auf, der mindestens zu einem benachbarten Fuß hinweist. Insbesondere sind zwei Vorsprünge an einem Fuß vorgesehen, die jeweils zu den benachbarten Füßen hinweisen. Durch die Kombination einer abgeschrägten Fläche an einem Fuß und einen Vorsprung an demselben und/oder an einem anderen Fuß können die Kraftkomponenten in Längsrichtung beeinflusst werden. Hierbei werden die Vorsprünge vorteilhafterweise an den entlang der Achse innen liegenden Füßen vorgesehen, wobei jeweils zwei Vorsprünge an einem Fuß vorgesehen sind.

An den beiden Außenfüßen sind vorteilhafterweise jeweils eine abgeschrägte Fläche und ein Vorsprung vorgesehen. Der Vorsprung kann an einem in Bezug auf die Richtung der Achse innen liegenden Innenfuß vorgesehen sein.

Der Vorsprung kann auch an einem in Bezug auf die Richtung der Achse außen liegenden Außenfuß vorgesehen sein.

Durch den Vorsprung kann ein Abstand zwischen den beiden entlang der Achse um mindestens 15 %, insbesondere um mindestens 20 %, vorzugsweise um mindestens 25 %, verkürzt werden. Damit kann der Abstand zwischen zwei benachbarten Beinen um mehr als 15 %, insbesondere um mehr als 40 % bzw. um mehr als 50 % gekürzt werden, wenn die beiden benachbarten Beine jeweils einen zum anderen hinzeigenden Vorsprung aufweisen.

Der Vorsprung kann entlang der Achse im Längsschnitt trapezförmig sein. Vorteilhafterweise entspricht ein axialer Längsschnitt einer abgeschrägten Fläche im Wesentlichen einem axialen Längsschnitt eines Vorsprungs.

Die abgeschrägte Fläche kann durch eine ebene Fläche gebildet sein, welche schräg zur Achse steht und einen Winkel zur Achse im Bereich von 20 ° bis 70 °, insbesondere in einem Bereich von 20 ° bis 60 °, vorzugsweise in einem Bereich von 40 ° bis 50 ° aufweist. Die abgeschrägte Fläche kann auch gewölbt sein, die insbesondere konvex, d. h. nach außen gewölbt, ist.

In einer weiteren Ausgestaltung sind ein inneres Bein und zwei hier entlang der Achse benachbarte Beine vorgesehen. Der Stator weist vorteilhafterweise mindestens zwei Antriebsspulen auf, deren Wicklungsrichtung im Wesentlichen senkrecht zur Achse steht und sich jeweils auf einer Seite der Achse befinden. Die Magnete sind in einer Richtung senkrecht zur Achse magnetisiert.

Der Stator kann mindestens eine Antriebsspule, insbesondere mindestens zwei in Bezug auf den Läufer gegenüberliegend angeordnete Antriebsspulen aufweisen. Die Antriebsspule weist eine Spulenachse auf, die insbesondere im Fußbereich der Beine im Wesentlichen senkrecht auf der Achse steht.

Vorteilhafterweise weist der Läufer mehrere entlang der Achse hintereinander angeordnete, alternierend umgekehrt gepolte Magnete, insbesondere mehrere hintereinander angeordnete, alternierend in einer Richtung senkrecht zur Achse umgekehrt gepolte Magnete auf. Das magnetische Feld eines Magnets beträgt vorteilhafterweise an den Polen mindestens 0,6 Tesla, vorzugsweise mindestens 0,8 Tesla.

In einer vorteilhaften Ausgestaltung weist der Läufer mehrere in Richtung der Achse hintereinander angeordnete Magnete auf, deren jeweilige Längen unterschiedlich sind.

Hierbei können beispielsweise drei Magnete hintereinander angeordnet werden, wobei die beiden äußeren Magnete die gleiche Länge aufweisen, welche verschieden ist von der Länge des zwischen den äußeren beiden Magneten befindlichen inneren Magneten Hierbei sind die Magnete symmetrisch angeordnet, jedoch wirken die unterschiedlichen Längen, dass eine entlang einer Richtung entlang der Achse wirkende Kraft, die durch ein erstes Bein und einen ersten Magneten hervorgerufen wird, durch eine in der entgegengesetzten Richtung entlang der Achse wirkende Kraft, die durch ein zweites Bein und einen zweiten Magneten hervorgerufen wird, zumindest teilweise kompensiert wird.

In ähnlicher Weise kann der Stator mehr als drei Beine aufweisen, deren Breiten unterschiedlich sind. Weiterhin kann der Stator mehr als drei Beine aufweisen, wobei die Abstände zwischen den Beinen entlang der Achse unterschiedlich sind. Auch über die Bemessung der Breiten und jeweiligen Abstände der Beine kann eine gegenseitige Kompensation der Kraftbeiträge in axialer Richtung bewirkt werden.

In einer bevorzugten Ausgestaltung weist der Läufer mehrere in der Richtung der Achse hintereinander angeordnete Magnete auf, deren jeweilige Längen relativ zu den jeweiligen Breiten und Abständen der Beine entlang der Achse so bemessen sind, dass sich die Kraftbeiträge der einzelnen Magnete entlang der Achse ohne Stromeinwirkung gegenseitig zumindest teilweise kompensieren, insbesondere dass über den Arbeitshub des Läufers ein entlang der Achse wirkender maximaler Kraftbetrag ohne Stromeinwirkung einer Antriebsspule kleiner als 30 %, insbesondere kleiner als 20 %, vorzugsweise kleiner als 10 %, des in Betrieb entlang der Achse wirkenden maximalen Kraftbetrags unter Stromeinwirkung ist. Der maximale Kraftbetrag wird an dem Linearantrieb bei konstantem maximalem nominalem Spulenstrom innerhalb des Arbeitsbereichs bestimmt. Durch die Superposition und Überlagerung der einzelnen Kraftbeiträge wird eine unerwünschte Gesamtkraft entlang der Achse erheblich vermindert. Dieses vereinfacht die Regelung des Linearantriebs und sorgt damit für eine verbesserte Kontrolle der Hin- und Herbewegung des Läufers.

In einer speziellen Ausgestaltung weist der erfindungsgemäße Linearantrieb mindestens eines der folgenden Merkmale (α1) bis (α8) auf:
(α1) die Beine (5, 6) weisen in Richtung der Achse (3) eine Breite (B1) im Bereich von 10 mm bis 40 mm, insbesondere 15 mm bis 25 mm, auf;
(α2) die abgeschrägte Fläche (9) weist in einer Richtung senkrecht zur Achse (3) eine Höhe (H1) im Bereich von 2,5 mm bis 5,5 mm, insbesondere im Bereich von 3,5 mm bis 4,5 mm, auf;
(α3) die abgeschrägte Fläche (9) weist in Richtung der Achse (3) eine Breite (B2) im Bereich von 1 mm bis 3 mm, insbesondere im Bereich von 1,5 mm bis 2,5 mm, auf;
(α4) die Vorsprünge (12, 13) weisen in einer Richtung senkrecht zur Achse (3) eine Höhe (H2) im Bereich von 2,5 mm bis 5,5mm, insbesondere im Bereich von 3,5 mm bis 4,5 mm, auf;
(α5) die Vorsprünge (12, 13) weisen in Richtung der Achse (3) eine Breite (B3) im Bereich von 1 mm bis 3 mm, insbesondere im Bereich von 1,5 mm bis 2,5 mm, auf;
(α6) der Läufer (7) weist eine Länge (L1) in Richtung der Achse (3) im Bereich von 30 mm bis 100 mm, insbesondere im Bereich von 50mm bis 70 mm, auf;
(α7) die Beine (5, 6) weisen in Richtung der Achse (3) einen Abstand (A1) im Bereich von 5 mm bis 20 mm, insbesondere 8 mm bis 12 mm, auf;
(α8) es sind mehrere Magnete (22, 23) und mehrere Beine (5, 6) vorgesehen und eine Länge (L2) der Magnete (22, 23) in Richtung der Achse (3) entspricht im Wesentlichen der Summe aus Breite (B1) und Abstand (A1) der Beine (5, 6) entlang der Achse (3).

Hierbei können die Merkmale (α1) bis (α8) jeweils einzeln angewandt oder beliebig miteinander kombiniert werden. Vorteilhaft ist insbesondere eine Kombination der Merkmale (α1) bis (α8).

In einer speziellen Ausgestaltung weist mindestens ein Fuß des Linearantriebs eine abgeschrägte Fläche auf und der Läufer weist mehrere in der Richtung der Achse hintereinander angeordnete Magnete auf, deren Länge im Wesentlichen der Summe aus Breite und Abstand der Beine entlang der Achse entspricht.

Der erfindungsgemäße Linearverdichter umfasst ein Kolbengehäuse, eine darin entlang einer Achse hin und her beweglichen Verdichterkolben, und den erfindungsgemäßen Linearantrieb. Die Vorteile des erfindungsgemäßen Linearantriebs übertragen sich auf den Linearverdichter in der Weise, dass eine Bewegung des Verdichterkolbens besonders präzise geregelt werden kann, wodurch eine Führung des Verdichterkolbens besonders nah an eine Ventilplatte im Kolbengehäuse ermöglicht wird, so dass ein Totvolumen besonders gering ausgestaltet werden kann. Hierdurch wird der Wirkungsgrad des Linearverdichters gesteigert und ein Verdichten eines Fluids, insbesondere eines Kältemittels, kann effizient und energiesparend bewirkt werden.

Das Kältegerät, insbesondere ein Kühl- und/oder Gefrierschrank oder eine Klimaanlage, umfasst den erfindungsgemäßen Linearantrieb und/oder erfindungsgemäßen Linearverdichter. Aufgrund der verbesserten Regelbarkeit bzw. Steuerbarkeit der Bewegung des Verdichterkolbens kann das Kältegerät präziser, zuverlässiger, effizienter und energiesparsamer betrieben werden.

Die Erfindung betrifft auch eine Verwendung gemäß Anspruch 24. Durch den effizienten, zuverlässigen und energiesparenden Betrieb des Linearantriebs, des Linearverdichters und/oder des Kältegeräts wird ein effizientes, zuverlässiges und energiesparendes Kühlen von Waren bzw. Verdichten von Fluiden ermöglicht. Damit ist ein besonders effizientes Kühlen von Waren möglich.

Der Verdichterkolben wird vorteilhafterweise mittels einer Gasdrucklagerung, d. h. mit Hilfe einer Öffnungen aufweisenden Gehäusewand, wobei durch die Öffnungen ein Fluid gedrückt wird, welches ein Gaspolster zwischen dem Verdichterkolben und der Gehäusewand bildet, berührungslos gelagert.

Weitere vorteilhafte Einzelheiten und besondere Ausgestaltungen werden anhand der folgenden Zeichnung, welche die vorliegende Erfindung nicht einschränken sondern lediglich exemplarisch illustrieren soll, weiter erläutert. Es zeigen schematisch:
- Fig. 1: einen erfindungsgemäßen Linearverdichter in einem Längsschnitt entlang der Bewegungsachse;
- Fig. 2: einen erfindungsgemäßen Linearverdichter in einem Längsschnitt entlang der Bewegungsachse;
- Fig. 3: ein erfindungsgemäßes Kältegerät unter Verwendung des erfindungsgemäßen Linearverdichters nach Fig. 2;
- Fig. 4: einen Graph, der die einzelnen Kraftbeiträge auf einen Läufer bei einem konstanten Strom und einem bekannten Design zeigt;
- Fig. 5: einen Graph, der die einzelnen Kraftbeiträge auf einen Läufer bei einem konstanten Strom und dem erfindungsgemäßen Linearantrieb zeigt.

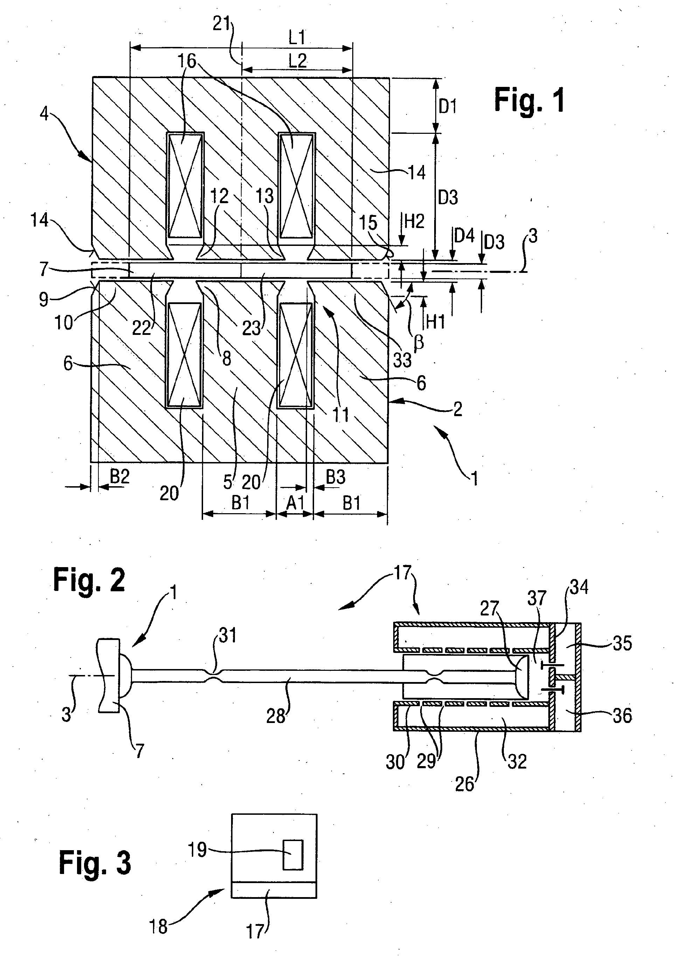

Fig. 1 zeigt den erfindungsgemäßen Linearantrieb 1 in einem Längsschnitt entlang einer Bewegungsachse 3 und entlang einer Spulenachse 21 einer Antriebsspule 16, 20 an einem Stator 2. Der Linearantrieb 1 weist den Stator 2 und einen Läufer 7 auf, wobei der Läufer 7 entlang einer Achse 3 zwischen zwei Umkehrpunkten oszillierend hin und her bewegt wird. Der Stator 2 weist einen Magnetfeldführungskern 4 mit einem inneren Bein 5 und zwei äußeren Beinen 6 auf, die jeweils Füße 8, 33 aufweisen, die sich im Wesentlichen zum Läufer 7 hin erstrecken. An dem inneren Bein 5 ist ein Innenfuß 8 angeordnet und an dem äußeren Bein 6 ist ein Außenfuß 10, 33 angeordnet. Die Füße 8, 10, 33 weisen eine abgeschrägte Fläche 9 und/oder einen Vorsprung 12, 13 auf. Die abgeschrägte Fläche 9 kann als ebene Fläche 14 oder als konvex gewölbte Fläche 15 ausgestaltet sein. Der Innenfuß 8 weist einen ersten Vorsprung 12 und einen zweiten Vorsprung 13 auf, die jeweils zu den benachbarten Außenfüßen 10, 33 hinweisen. Die Vorsprünge 12, 13 sind entlang der Achse 3 im Längsschnitt trapezförmig. Der Läufer 7 weist einen ersten Magnet 22 und einen zweiten Magnet 23 auf, die in einer Richtung senkrecht zur Achse 3 magnetisiert und umgekehrt gepolt sind. Die Magnete 22, 23 sind parallel zueinander magnetisiert. Die Magnete 22, 23 wechselwirken mit den Füßen 8, 10, 33. Der Stator 2 weist in Bezug auf den Läufer 7 gegenüberliegend angeordnete Antriebsspulen 16, 20 auf, deren Spulenachse 21 senkrecht auf der Achse 3 steht. Durch die Vorsprünge 12, 13 und die abgeschrägten Flächen 9 werden axiale Kraftkomponenten auf den Läufer 7, die bereits ohne Stromfluss durch die Antriebsspulen 16, 20 auf den Läufer 7 wirken, erheblich reduziert, insbesondere wird eine ungerade Kraftkomponente des Läufers 7 entlang der Achse 3 verringert. Der Abstand A1 der Beine 5, 6 entlang der Achse 3 beträgt 10 mm. Die Breite B1 der Beine 5, 6 in einer Richtung entlang der Achse 3 beträgt 20 mm. Die Breite B2 der abgeschrägten Fläche 9 in einer Richtung entlang der Achse 3 beträgt 2 mm. Die Breite B3 der Vorsprünge 12, 13 in einer Richtung entlang der Achse 3 beträgt 2 mm. Die Länge L1 des Läufers 7 entlang der Achse beträgt 60 mm. Die Länge L2 der Magneten 22, 23 des Läufers 7 beträgt 30 mm. Die Höhe H1 der abgeschrägten Fläche 9 in einer Richtung senkrecht zur Achse 3 beträgt 4 mm. Die Höhe H2 der Vorsprünge 12, 13 in Richtung senkrecht zur Achse 3 beträgt 4 mm. Der Winkel β beträgt in etwa 45 °, die Länge D1 beträgt 15 mm, die Länge D2 beträgt 35 mm, die Länge D3 beträgt 4,1 mm, die Länge D4 beträgt 6 mm.

Fig. 2 zeigt einen erfindungsgemäßen Linearverdichter 17 mit einem erfindungsgemäßen Linearantrieb 1 in einer Schnittansicht, wobei ein Läufer 7 des Linearantriebs 1 entlang einer Achse 3 hin und her beweglich ist. Der Läufer 7 überträgt eine Kraft über eine Kolbenstange 28 auf einen Verdichterkolben 17, der in einem Kolbengehäuse 26 mit Hilfe einer Öffnungen 20 aufweisenden Wand 30 berührungslos mit Hilfe eines über eine Zu.führung 32 bereitgestellten durch die Öffnungen 29 strömenden Fluids gelagert wird. Die Kolbenstange 28 weist zwei Engstellen 31 auf. Mit Hilfe der Engstellen 31 können Biegekräfte aufgenommen werden und Verkantungen vermieden werden, welches insbesondere bei den durch Gasdruck gelagerten Verdichterkolben 17 besonders bedeutsam ist.

Hierdurch wird ein möglichst reibungsarmes Gleiten des Verdichterkolbens 27 an der Wand 30 ermöglicht. Das Kolbengehäuse 26 weist eine Ventilplatte 34 auf und einen Sauganschluss 35 bzw. einen Druckanschluss 36. Durch die Vergleichmäßigung der Kräfte entlang der Achse 3 wird die Kontrolle der Bewegung des Läufers 7 vereinfacht und eine verbesserte Präzision der Bewegung des Verdichterkolbens 27 erreicht, welches ein dichteres Führen an eine Ventilplatte 34 am Kolbengehäuse 26 ermöglicht, so dass ein vor der Verdichterplatte 34 befindliches Totvolumen 37 verringert werden kann, ohne dass der Verdichterkolben 27 an der Ventilplatte 34 anschlägt.

Fig. 3 zeigt ein erfindungsgemäßes Kältegerät 18, welches als Kühlschrank ausgestaltet ist, womit Waren 18 zuverlässig, effizient und zügig gekühlt werden können. Das Kältegerät 18 weist den erfindungsgemäßen Linearverdichter 17 auf.

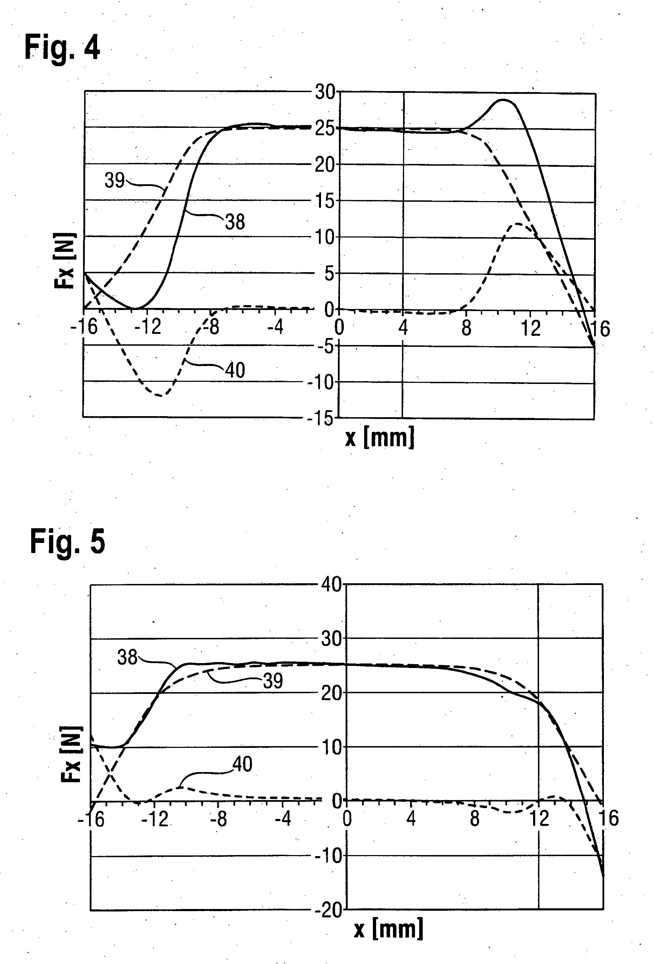

Fig. 4 zeigt einen Graph, der die Kraftkomponenten in Richtung der Achse 3 darstellt bei einem konstanten nominellen Spulenstrom eines bekannten Linearantriebs. Die durchgezogene Linie 38 zeigt die gesamte auf den Läufer 7 wirkende Kraft. Die gestrichelte Linie 40 zeigt den ungeraden Anteil, welcher der Kraft entspricht, wenn die Antriebsspule, 16, 20 nicht von einem Strom durchflossen wird, die gestrichelte Linie 39 gibt den geraden Anteil wieder, der hinzukommt, wenn die Antriebsspulen 16, 20 von dem nominellen Spulenstrom durchflossen ist. Man erkennt, dass bei dem bekannten Linearantrieb der ungerade Anteil 40 zu einer erheblichen Asymmetrie der gesamten Kraft 38 führt, so dass eine Ansteuerung des Läufers 7 in Abhängigkeit des Verschiebungsweges X erfolgen muss, welches die Regelung bzw. Steuerung des Linearantriebs 1 erheblich komplizierter gestaltet.

Fig. 5 zeigt einen Graph, der die unterschiedlichen Kraftbeiträge wiedergibt für den erfindungsgemäßen Linearverdichter 1 in Abhängigkeit des Verschiebeweges des Läufers 7 aus seiner zentralen Lage. Man erkennt, dass der ungerade Anteil der Kraftkomponente entlang der Achse 3 erheblich reduziert ist, so dass die Gesamtkraft über einen weiteren Bereich von etwa - 11 mm bis + 10 mm in etwa konstant ist. Im stromlosen Zustand der Antriebsspulen 16, 20 wirkt eine wesentlich reduzierte Kraft auf den Läufer 7.

Die Erfindung betrifft einen Linearantrieb 1 umfassend einen Stator 2 und eine Achse 3, einen hin und her beweglichen Läufer 7, wobei der Stator 2 einen magnetisierbaren Magnetfeldführungskern 4 mit Beinen 5, 6 aufweist, wobei sich die Beine 5, 6 jeweils mit einem Fuß 8, 10 im Wesentlichen zum Läufer 7 hin erstrecken, wobei mindestens ein Fuß 8, 10 eine abgeschrägte Fläche 9 aufweist, oder mehrere in der Richtung der Achs 3 hintereinander angeordnete Magnete 22, 23 aufweist, wobei die jeweiligen Längen L2 der Magneten 22, 23 entlang der Achse 3 und die jeweiligen Breiten B1 der Beine 5, 6 entlang der Achse 3 und/oder die jeweiligen Abstände A1 der Beine 5, 6 entlang der Achse 3 verschieden sind, derart dass Kraftkomponenten des Läufers 7 entlang der Achse 3 im stromlosen Zustand des Linearantriebs 1 verringert werden; sowie einen Linearverdichter, eine Kältemaschine und ein Verfahren zum Kühlen einer bzw. zum Verdichten eines Fluids. Die Erfindung zeichnet sich dadurch aus, dass durch die Ausgestaltung des Fußes 8, 10 mit einer abgeschrägten Fläche 9 bzw. durch eine geeignete Wahl der Längen, Breiten und Abstände der Beine 5,6 unerwünschte Kraftkomponenten entlang der Achse 3 verringert werden, so dass eine verbesserte Steuer- bzw. Regelbarkeit der Hin- und Herbewegung des Läufers 7 erreicht wird.

### Bezugszeichenliste

- 1: Linearantrieb
- 2: Stator
- 3: Achse
- 4: Magnetfeldführungskern
- 5: inneres Bein
- 6: äußeres Bein
- 7: Läufer
- 8: Innenfuß
- 9: abgeschrägte Fläche
- 10: Außenfuß
- 11: fußseitiger Bereich
- 12: Vorsprung
- 13: Vorsprung
- 14: ebene Fläche
- 15: gewölbte Fläche
- 16: Antriebsspule
- 17: Linearverdichter
- 18: Kältegerät
- 19: Ware
- 20: Antriebsspule
- 21: Spulenachse
- 22: erster Magnet
- 23: zweiter Magnet
- 26: Kolbengehäuse
- 27: Verdichterkolben
- 28: Kolbenstange
- 29: Öffnungen
- 30: Gehäusewand
- 31: Engstelle
- 32: Zuführung
- 33: Außenfuß
- 34: Ventilplatte
- 35: Sauganschluss
- 36: Druckanschluss
- 37: Totvolumen

- A1: Abstand der Beine 5,6 entlang der Achse 3
- B1: Breite der Beine 5,6 in einer Richtung entlang der Achse 3
- B2: Breite der abgeschrägte Fläche 9 in einer Richtung entlang der Achse 3
- B3: Breite der Vorsprünge 12,13 in einer Richtung entlang zur Achse 3
- L1: Länge des Läufers 7 entlang der Achse 3
- L2: Länge des Magneten 22, 23 am Läufer 7
- H1: Höhe der abgeschrägte Fläche 9 in einer Richtung senkrecht zur Achse 3
- H2: Höhe der Vorsprünge in Richtung senkrecht zur Achse 3
- β: Winkel
- D1 bis D4: Längen

## Patentansprüche

1. Linearantrieb (1) umfassend einen Stator (2) und einen darin entlang einer Achse (3) hin und her beweglichen Läufer (7), wobei der Stator (2) einen magnetisierbaren Magnetfeldführungskern (4) mit Beinen (5, 6) aufweist, wobei sich die Beine (5, 6) jeweils mit einem Fuß (8, 10) im Wesentlichen zum Läufer (7) hin erstrecken, wobei der Läufer mehrere in der Richtung der Achse (3) hintereinander angeordnete Magnete (22, 23) aufweist, **dadurch gekennzeichnet, dass** die jeweiligen Längen (L2) der Magnete (22, 23) entlang der Achse (3) und/oder die jeweiligen Breiten (B1) der Beine (5, 6) entlang der Achse (3) und/oder die jeweiligen Abstände (A1) der Beine (5, 6) entlang der Achse (3) verschieden sind derart, dass sich die Kraftkomponenten der Magnete (22, 23) entlang der Achse (3) im stromlosen Zustand des Linearantriebs (1) im wesentlichen gegenseitig kompensieren.

2. Linearantrieb (1) nach Anspruch 1, **dadurch gekennzeichnet, dass** ein in Bezug auf die Richtung der Achse (3) außen liegender Außenfuß (10, 33) eine abgeschrägte Fläche (9) aufweist, insbesondere beide Außenfüße (10, 33) eine abgeschrägte Fläche (9) aufweisen.

3. Linearantrieb (1) nach einem der vorherigen Ansprüche, **dadurch gekennzeichnet, dass** ein Fuß (8, 10) einen Vorsprung aufweist, der mindestens zu einem benachbarten Fuß (8, 10) hinweist, wobei insbesondere ein Fuß (8, 10) zwei Vorsprünge (12, 13) aufweist, die jeweils zu den benachbarten Füßen (8, 10) hinweisen.

4. Linearantrieb (1) nach Anspruch 3, **dadurch gekennzeichnet, dass** der Vorsprung (12) an einem in Bezug auf die Richtung der Achse (3) innen liegenden Innenfuß (8) vorgesehen ist.

5. Linearantrieb (1) nach Anspruch 3, **dadurch gekennzeichnet, dass** der Vorsprung (12) an einem in Bezug auf die Richtung der Achse (3) außen liegenden Außenfuß (10) vorgesehen ist.

6. Linearantrieb (1) nach einem der vorherigen Ansprüche 3 bis 5, **dadurch gekennzeichnet, dass** ein Abstand (A1) zwischen den Beinen (5, 6) entlang der Achse (3) durch einen Vorsprung (12, 13) um mindestens 15 %, insbesondere um mindestens 20 %, vorzugsweise um mindestens 25 %, verkürzt wird.

7. Linearantrieb (1) nach einem der vorherigen Ansprüche 3 bis6, **dadurch gekennzeichnet, dass** der Vorsprung (12, 13) entlang der Achse (3) im Längsschnitt trapezförmig ist.

8. Linearantrieb (1) nach einem der vorherigen Ansprüche 3 bis 7, **dadurch gekennzeichnet, dass** ein axialer Längsschnitt einer abgeschrägten Fläche (9) im Wesentlichen einem axialer Längsschnitt eines Vorsprungs (12, 13) entspricht.

9. Linearantrieb (1) nach einem der vorherigen Ansprüche, **dadurch gekennzeichnet, dass** eine abgeschrägte Fläche (9) durch eine ebene Fläche (14) gebildet wird.

10. Linearantrieb (1) nach Anspruch 9, **dadurch gekennzeichnet, dass** die ebene Fläche (14) schräg zur Achse (3) steht und einen Winkel (β) zur Achse (3) im Bereich von 20° bis 70°, insbesondere in einem Bereich von 20° bis 60°, vorzugsweise in einem Bereich von 40° bis 50°, aufweist.

11. Linearantrieb (1) nach einem der vorherigen Ansprüche, **dadurch gekennzeichnet, dass** eine abgeschrägte Fläche (9) eine gewölbte Fläche (15), insbesondere eine konvex gewölbte Fläche, aufweist.

12. Linearantrieb (1) nach einem der vorherigen Ansprüche, **dadurch gekennzeichnet, dass** ein inneres Bein (5) und zwei hierzu entlang der Achse (3) benachbarte äußere Beine (6) vorgesehen sind.

13. Linearantrieb (1) nach einem der vorherigen Ansprüche, dass der Stator (2) mindestens eine Antriebsspule (16, 20), insbesondere mindestens zwei im Bezug auf den Läufer (7) gegenüberliegend angeordnete Antriebsspulen (16, 20), aufweist.

14. Linearantrieb (1) nach Anspruch 13, **dadurch gekennzeichnet, dass** die Antriebsspule (16, 20) eine Spulenachse (21) aufweist, die, insbesondere im fußseitigen Bereich (11) der Beine (5, 6), im Wesentlichen senkrecht auf der Achse (3) steht.

15. Linearantrieb (1) nach einem der vorherigen Ansprüche, **dadurch gekennzeichnet, dass** der Läufer (7) mehrere entlang der Achse (3) hinter einander angeordnete, alternierend umgekehrt gepolte Magnete (22,23), insbesondere mehrere alternierend in einer Richtung senkrecht zur Achse (3) umgekehrt gepolte Magnete (22, 23), aufweist.

16. Linearantrieb (1) nach einem der vorherigen Ansprüche, **dadurch gekennzeichnet, dass** der Läufer mehrere in der Richtung der Achse (3) hintereinander angeordnete Magnete (22, 23) aufweist, deren jeweilige Längen (L2) unterschiedlich sind.

17. Linearantrieb (1) nach einem der vorherigen Ansprüche, **dadurch gekennzeichnet, dass** der Stator (2) mehr als drei Beine (5, 6) aufweist, deren Breiten (B1) unterschiedlich sind.

18. Linearantrieb (1) nach einem der vorherigen Ansprüche, **dadurch gekennzeichnet, dass** der der Stator (2) mehr als drei Beine (5, 6) aufweist, wobei die Abstände (A1) zwischen den Beinen (5, 6) entlang der Achse (3) unterschiedlich sind.

19. Linearantrieb (1) nach einem der vorherigen Ansprüche, **dadurch gekennzeichnet, dass** der Läufer (7) mehrere in der Richtung der Achse (3) hintereinander angeordnete Magnete (22, 23) aufweist, deren jeweilige Längen (L2) relativ zu den jeweilig Breiten (B1) und Abständen (A1) der Beine (5, 6) entlang der Achse (3) so bemessen sind, dass sich die Kraftbeiträge der einzelnen Magnete (22,23) entlang der Achse (3) ohne Stromeinwirkung gegenseitig zumindest teilweise kompensieren, insbesondere dass über den Arbeitshub des Läufers (7) ein entlang der Achse (3) wirkender maximaler Kraftbetrag ohne Stromeinwirkung einer Antriebsspule (20) kleiner als 30 %, insbesondere kleiner als 20%, vorzugsweise kleiner als 10%, des im Betrieb entlang der Achse (3) wirkenden maximalen Kraftbetrags unter Stromeinwirkung ist.

20. Linearantrieb (1) nach einem der vorherigen Ansprüche, **gekennzeichnet, durch** mindestens eines der folgenden Merkmale (α1) bis (α8):
(α1) die Beine (5, 6) weisen in Richtung der Achse (3) eine Breite (B1) im Bereich von 10 mm bis 40 mm, insbesondere 15 mm bis 25 mm, auf;
(α2) die abgeschrägte Fläche (9) weist in einer Richtung senkrecht zur Achse (3) eine Höhe (H1) im Bereich von 2,5 mm bis 5,5 mm, insbesondere im Bereich von 3,5 mm bis 4,5 mm, auf;
(α3) die abgeschrägte Fläche (9) weist in Richtung der Achse (3) eine Breite (B2) im Bereich von 1 mm bis 3 mm, insbesondere im Bereich von 1,5 mm bis 2,5 mm, auf;
(α4) die Vorsprünge (12, 13) weisen in einer Richtung senkrecht zur Achse (3) eine Höhe (H2) im Bereich von 2,5 mm bis 5,5mm, insbesondere im Bereich von 3,5 mm bis 4,5 mm, auf;
(α5) die Vorsprünge (12, 13) weisen in Richtung der Achse (3) eine Breite (B3) im Bereich von 1 mm bis 3 mm, insbesondere im Bereich von 1,5 mm bis 2,5 mm, auf.
(α6) der Läufer (7) weist eine Länge (L1) in Richtung der Achse (3) im Bereich von 30 mm bis 100 mm, insbesondere im Bereich von 50mm bis 70 mm, auf.
(α7) die Beine (5, 6) weisen in Richtung der Achse (3) einen Abstand (A1) im Bereich von 5 mm bis 20 mm, insbesondere 8 mm bis 12 mm, auf;
(α8) es sind mehrere Magnete (22, 23) und mehrere Beine (5, 6) vorgesehen und eine Länge (L2) der Magnete (22, 23) in Richtung der Achse (3) entspricht im Wesentlichen der Summe aus Breite (B1) und Abstand (A1) der Beine (5, 6) entlang der Achse (3).

21. Linearantrieb (1) nach einem der vorherigen Ansprüche, **dadurch gekennzeichnet, dass** mindestens ein Fuß (8, 10) eine abgeschrägte Fläche (9) aufweist und dass der Läufer mehrere in der Richtung der Achse (3) hintereinander angeordnete Magnete (22, 23) aufweist, deren Länge (L2) im wesentlichen der Summe aus Breite (B1) und Abstand (A1) der Beine (5, 6) entlang der Achse (3) entspricht.

22. Linearverdichter (17) umfassend ein Kolbengehäuse (26), einen darin entlang einer Achse (3) hin und her beweglichen Verdichterkolben (27), und einen Linearantrieb (1) nach einem der Ansprüche 1 bis 21.

23. Kältegerät (18), insbesondere Kühl- und/oder Gefrierschrank oder Klimaanlage, umfassend einen Linearantrieb (1) nach einem der Ansprüche 1 bis 21 oder einen Linearverdichter nach Anspruch 22.

24. Verwendung des Linearantriebs nach einem der Ansprüche 1 - 21, des Linearverdichters nach Anspruch 22 und/oder des Kältegeräts nach Anspruch 23 zum Kühlen einer Ware und/oder zum Verdichten eines Fluids.

## Claims

1. Linear drive (1) comprising a stator (2) and a rotor (7) that can move therein back and forth along an axis (3), with the stator (2) having a magnetisable magnetic-field guide core (4) that has legs (5, 6) extending each with one foot (8, 10) substantially toward the rotor (7), with the rotor having a plurality of magnets (22, 23) arranged one behind the other in the direction of the axis (3), **characterised in that** the respective lengths (L2) of the magnets (22, 23) along the axis (3) and/or the respective widths (B1) of the legs (5, 6) along the axis (3) and/or the respective spacings (A1) of the legs (5, 6) along the axis (3) are different such that force components of the magnets (22, 23) along the axis (3) will substantially compensate each other when the linear drive (1) is in the de-energised state.

2. Linear drive (1) according to claim 1, **characterised in that** an outer foot (10, 33) in an outer position referred to the direction of the axis (3) has an inclined surface (9), in particular **in that** both outer feet (10, 33) have an inclined surface (9).

3. Linear drive (1) according to one of the preceding claims, **characterised in that** a foot (8, 10) has a projection pointing toward at least one adjacent foot (8, 10), with in particular a foot (8, 10) having two projections (12, 13) that each point toward the adjacent feet (8, 10).

4. Linear drive (1) according to claim 3, **characterised in that** the projection (12) is provided on an inner foot (8) in an inner position referred to the direction of the axis (3).

5. Linear drive (1) according to claim 3, **characterised in that** the projection (12) is provided on an outer foot (10) in an outer position referred to the direction of the axis (3).

6. Linear drive (1) according to one of the preceding claims 3 to 5, **characterised in that** a spacing (A1) between the legs (5, 6) along the axis (3) is owing to a projection (12, 13) reduced by at least 15%, in particular by at least 20%, preferably by at least 25%.

7. Linear drive (1) according to one of the preceding claims 3 to 6, **characterised in that** the projection (12, 13) along the axis (3) is trapezoidal in the longitudinal section.

8. Linear drive (1) according to one of the preceding claims 3 to 7, **characterised in that** an axial longitudinal section of an inclined surface (9) corresponds substantially to an axial longitudinal section of a projection (12, 13).

9. Linear drive (1) according to one of the preceding claims, **characterised in that** an inclined surface (9) is formed by a flat surface (14).

10. Linear drive (1) according to claim 9, **characterised in that** the flat surface (14) is inclined with respect to the axis (3) and has an angle (ß) with respect to the axis (3) in the range of 20° to 70°, in particular in a range of 20° to 60°, preferably in a range of 40° to 50°.

11. Linear drive (1) according to one of the preceding claims, **characterised in that** an inclined surface (9) has a curved surface (15), in particular a convexly curved surface.

12. Linear drive (1) according to one of the preceding claims, **characterised in that** an inner leg (5) and two outer legs (6) adjacent thereto along the axis (3) are provided.

13. Linear drive (1) according to one of the preceding claims, **characterised in that** the stator (2) has at least one drive coil (16, 20), in particular at least two drive coils (16, 20) arranged opposite referred to the rotor (7).

14. Linear drive (1) according to claim 13, **characterised in that** the drive coil (16, 20) has a coil axis (21) which, particularly in the foot-side region (11) of the legs (5, 6), is substantially perpendicular to the axis (3).

15. Linear drive (1) according to one of the preceding claims, **characterised in that** the rotor (7) has a plurality of magnets (22, 23) arranged one behind the other along the axis (3) and having alternately opposing polarity, in particular a plurality of magnets (22, 23) having alternately opposing polarity in a direction perpendicular to the axis (3).

16. Linear drive (1) according to one of the preceding claims, **characterised in that** the rotor has a plurality of magnets (22, 23) that are arranged one behind the other in the direction of the axis (3) and have different lengths (L2).

17. Linear drive (1) according to one of the preceding claims, **characterised in that** the stator (2) has more than three legs (5, 6) having different widths (B1).

18. Linear drive (1) according to one of the preceding claims, **characterised in that** the stator (2) has more than three legs (5, 6), with the spacings (A1) between the legs (5, 6) along the axis (3) being different.

19. Linear drive (1) according to one of the preceding claims, **characterised in that** the rotor (7) has a plurality of magnets (22, 23) that are arranged one behind the other in the direction of the axis (3) and whose respective lengths (L2) relative to the respective widths (B1) and spacing (A1) of the legs (5, 6) along the axis (3) are dimensioned such that the force constituents of the individual magnets (22, 23) along the axis (3) without the effect of current will compensate each other at least partially, in particular such that a maximum force constituent acting along the axis (3) without the effect of current in a drive coil (20) will across the working stroke of the rotor (7) be smaller than 30%, in particular smaller than 20%, preferably smaller than 10% of the maximum force constituent acting along the axis (3) during operation under the effect of current.

20. Linear drive (1) according to one of the preceding claims, **characterised by** at least one of the following features (α1) to (α8):
(a1) the legs (5, 6) have in the direction of the axis (3) a width (B1) in the range of 10 mm to 40 mm, in particular 15 mm to 25 mm;
(a2) the inclined surface (9) has in a direction perpendicular to the axis (3) a height (H1) in the range of 2.5 mm to 5.5 mm, in particular in the range of 3.5 mm to 4.5 mm;
(a3) the inclined surface (9) has in the direction of the axis (3) a width (B2) in the range of 1 mm to 3 mm, in particular in the range of 1.5 mm to 2.5 mm;
(a4) the projections (12, 13) have in a direction perpendicular to the axis (3) a height (H2) in the range of 2.5 mm to 5.5 mm, in particular in the range of 3.5 mm to 4.5 mm;
(a5) the projections (12, 13) have in the direction of the axis (3) a width (B3) in the range of 1 mm to 3 mm, in particular in the range of 1.5 mm to 2.5 mm.
(a6) the rotor (7) has a length (L1) in the direction of the axis (3) in the range of 30 mm to 100 mm, in particular in the range of 50 mm to 70 mm.
(a7) the legs (5, 6) have in the direction of the axis (3) a spacing (A1) in the range of 5 mm to 20 mm, in particular 8 mm to 12 mm;
(a8) a plurality of magnets (22, 23) and a plurality of legs (5, 6) are provided and a length (L2) of the magnets (22, 23) in the direction of the axis (3) corresponds substantially to the sum of the width (B1) and spacing (A1) of the legs (5, 6) along the axis (3).

21. Linear drive (1) according to one of the preceding claims, **characterised in that** at least one foot (8, 10) has an inclined surface (9) and **in that** the rotor has a plurality of magnets (22, 23) that are arranged one behind the other in the direction of the axis (3) and whose length (L2) corresponds substantially to the sum of the width (B1) and spacing (A1) of the legs (5, 6) along the axis (3).

22. Linear compressor (17) comprising a piston housing (26), a compressor piston (27) that can move therein back and forth along an axis (3), and a linear drive (1) according to one of claims 1 to 21.

23. Refrigerating device (18), in particular a refrigerator and/or freezer or air-conditioning system, comprising a linear drive (1) according to one of claims 1 to 21 or a linear compressor according to claim 22.

24. Use of the linear drive according to one of claims 1-21, of the linear compressor according to claim 22 and/or of the refrigerating device according to claim 23 for refrigerating an item and/or compressing a fluid.

## Revendications

1. Entraînement linéaire (1) comprenant un stator (2) et un induit (7) déplaçable dans le stator en va-et-vient le long d'un axe (3), le stator (2) présentant un noyau conducteur de champ magnétique (4) magnétisable muni de pattes (5, 6), les pattes (5, 6) s'étendant respectivement essentiellement vers l'induit (7) avec un pied (8, 10), l'induit présentant plusieurs aimants (22, 23) disposés les uns derrière les autres en direction de l'axe (3), **caractérisé en ce que** les longueurs respectives (L2) des aimants (22, 23) le long de l'axe (3) et/ou les largeurs respectives (B1) des pattes (5, 6) le long de l'axe (3) et/ou les écarts respectifs (A1) des pattes (5, 6) le long de l'axe (3) sont différents de telle manière que les composantes de force des aimants (22, 23) le long de l'axe (3) se compensent essentiellement mutuellement à l'état sans courant de l'entraînement linéaire (1).

2. Entraînement linéaire (1) selon la revendication 1, **caractérisé en ce qu'**un pied extérieur (10, 33) situé à l'extérieur par rapport à la direction de l'axe (3) présente une surface en biseau (9), notamment **en ce que** les deux pieds extérieurs (10, 33) présentent une surface en biseau (9).

3. Entraînement linéaire (1) selon l'une quelconque des revendications précédentes, **caractérisé en ce qu'**un pied (8, 10) présente une saillie qui est dirigée au moins vers un pied voisin (8, 10), notamment un pied (8, 10) présentant deux saillies (12, 13) qui sont respectivement dirigées vers les pieds voisins (8, 10).

4. Entraînement linéaire (1) selon la revendication 3, **caractérisé en ce que** la saillie (12) est ménagée sur un pied intérieur (8) situé intérieurement par rapport à la direction de l'axe (3).

5. Entraînement linéaire (1) selon la revendication 3, **caractérisé en ce que** la saillie (12) est ménagée sur un pied extérieur (10) situé extérieurement par rapport à la direction de l'axe (3).

6. Entraînement linéaire (1) selon l'une quelconque des revendications 3 à 5, **caractérisé en ce qu'**un écart (A1) entre les pattes (5, 6) le long de l'axe (3) est raccourci d'au moins 15%, notamment d'au moins 20%, de préférence d'au moins 25% par une saillie (12, 13).

7. Entraînement linéaire (1) selon l'une quelconque des revendications 3 à 6, **caractérisé en ce que** la saillie (12, 13) est trapézoïdale en coupe longitudinale le long de l'axe (3).

8. Entraînement linéaire (1) selon l'une quelconque des revendications 3 à 7, **caractérisé en ce qu'**une coupe longitudinale axiale d'une surface en biseau (9) correspond essentiellement à une coupe longitudinale axiale d'une saillie (12, 13).

9. Entraînement linéaire (1) selon l'une quelconque des revendications précédentes, **caractérisé en ce qu'**une surface en biseau (9) est formée par une surface plane (14).

10. Entraînement linéaire (1) selon la revendication 9, **caractérisé en ce que** la surface plane (14) est inclinée par rapport à l'axe (3) et présente un angle (β) par rapport à l'axe (3) situé dans la plage de 20° à 70°, notamment dans une plage de 20° à 60°, de préférence dans une plage de 40° à 50°.

11. Entraînement linéaire (1) selon l'une quelconque des revendications précédentes, **caractérisé en ce qu'**une surface en biseau (9) présente une surface bombée (15), notamment une surface bombée convexe.

12. Entraînement linéaire (1) selon l'une quelconque des revendications précédentes, **caractérisé en ce qu'**une patte intérieure (5) et deux pattes extérieures (6) voisines à celle-ci le long de l'axe (3) sont ménagées.

13. Entraînement linéaire (1) selon l'une quelconque des revendications précédentes, **caractérisé en ce que** le stator (2) présente au moins une bobine d'entraînement (16, 20), notamment au moins deux bobines d'entraînement (16, 20) disposées de manière opposée l'une à l'autre par rapport à l'induit (7).

14. Entraînement linéaire (1) selon la revendication 13, **caractérisé en ce que** la bobine d'entraînement (16, 20) présente un axe de bobine (21) qui, notamment dans la partie côté pied (11) des pattes (5, 6), se situe essentiellement perpendiculairement à l'axe (3).

15. Entraînement linéaire (1) selon l'une quelconque des revendications précédentes, **caractérisé en ce que** l'induit (7) présente plusieurs aimants (22, 23) disposés les uns derrière les autres le long de l'axe (3), polarisés inversement en alternance, notamment plusieurs aimants (22, 23) polarisés inversement en alternance dans une direction perpendiculairement à l'axe (3).

16. Entraînement linéaire (1) selon l'une quelconque des revendications précédentes, **caractérisé en ce que** l'induit présente plusieurs aimants (22, 23) disposés les uns derrière les autres en direction de l'axe (3), dont les longueurs respectives (L2) sont différentes.

17. Entraînement linéaire (1) selon l'une quelconque des revendications précédentes, **caractérisé en ce que** le stator (2) présente plus de trois pattes (5, 6) dont les largeurs (B1) sont différentes.

18. Entraînement linéaire (1) selon l'une quelconque des revendications précédentes, **caractérisé en ce que** le stator (2) présente plus de trois pattes (5, 6), les écarts (A1) entre les pattes (5, 6) le long de l'axe (3) étant différents.

19. Entraînement linéaire (1) selon l'une quelconque des revendications précédentes, **caractérisé en ce que** l'induit (7) présente plusieurs aimants (22, 23) disposés les uns derrière les autres en direction de l'axe (3), dont les longueurs respectives (L2) par rapport aux largeurs respectives (B1) et aux écarts (A1) des pattes (5, 6) le long de l'axe (3) sont dimensionnées de manière à ce que les apports de force de chacun des aimants (22, 23) le long de l'axe (3) sans action du courant se compensent mutuellement au moins en partie, notamment de manière à ce qu'une valeur de force maximale agissant le long de l'axe (3) par l'intermédiaire de la course de travail de l'induit (7) sans action du courant d'une bobine d'entraînement (20) soit inférieure à 30%, notamment inférieure à 20%, de préférence inférieure à 10% de la valeur de force maximale agissant en fonctionnement le long de l'axe (3) sous l'action du courant.

20. Entraînement linéaire (1) selon l'une quelconque des revendications précédentes, **caractérisé par** au moins une des caractéristiques suivantes (α1) à (α8) :
(α1) les pattes (5, 6) présentent en direction de l'axe (3) une largeur (B1) située dans la plage de 10 mm à 40 mm, notamment de 15 mm à 25 mm ;
(α2) la surface en biseau (9) présente dans une direction perpendiculaire à l'axe (3) une hauteur (H1) située dans la plage de 2,5 mm à 5,5 mm, notamment dans la plage de 3,5 mm à 4,5 mm ;
(α3) la surface en biseau (9) présente en direction de l'axe (3) une largeur (B2) située dans la plage de 1 mm à 3 mm, notamment dans la plage de 1,5 mm à 2,5 mm ;
(α4) les saillies (12, 13) présentent dans une direction perpendiculaire à l'axe (3) une hauteur (H2) située dans la plage de 2,5 mm à 5,5 mm, notamment dans la plage de 3,5 mm à 4,5 mm ;
(α5) les saillies (12, 13) présentent en direction de l'axe (3) une largeur (B3) située dans la plage de 1 mm à 3 mm, notamment dans la plage de 1,5 mm à 2,5 mm ;
(α6) l'induit (7) présente une longueur (L1) en direction de l'axe (3) située dans la plage de 30 mm à 100 mm, notamment dans la plage de 50 mm à 70 mm ;
(α7) les pattes (5, 6) présentent en direction de l'axe (3) un écart (A1) situé dans la plage de 5 mm à 20 mm, notamment de 8 mm à 12 mm ;
(α8) plusieurs aimants (22, 23) et plusieurs pattes (5, 6) sont ménagés et une longueur (L2) des aimants (22, 23) en direction de l'axe (3) correspond essentiellement à la somme de la largeur (B1) et de l'écart (A1) des pattes (5, 6) le long de l'axe (3).

21. Entraînement linéaire (1) selon l'une quelconque des revendications précédentes, **caractérisé en ce qu'**au moins un pied (8, 10) présente une surface en biseau (9) et **en ce que** l'induit présente plusieurs aimants (22, 23) disposés les uns derrière les autres en direction de l'axe (3), dont la longueur (L2) correspond essentiellement à la somme de la largeur (B1) et de l'écart (A1) des pattes (5, 6) le long de l'axe (3).

22. Compresseur linéaire (17) comprenant un carter de piston (26), un piston de compression (27) déplaçable en va-et-vient dans le carter de piston le long d'un axe (3), et un entraînement linéaire (1) selon l'une quelconque des revendications 1 à 21.

23. Appareil frigorifique (18), notamment réfrigérateur et/ou congélateur ou installation de climatisation, comprenant un entraînement linéaire (1) selon l'une quelconque des revendications 1 à 21 ou un compresseur linéaire selon la revendication 22.

24. Utilisation de l'entraînement linéaire selon l'une quelconque des revendications 1 à 21, du compresseur linéaire selon la revendication 22 et/ou de l'appareil frigorifique selon la revendication 23 pour refroidir une marchandise et/ou pour comprimer un fluide.
